# EUROPEAN PATENT SPECIFICATION

(11) **EP 3 770 352 B1**
(45) Date of publication and mention of the grant of the patent: **22.12.2021**
(21) Application number: 20186282.8
(22) Date of filing: 16.07.2020
(51) Int. Cl.: E04B 1/19, B64B 1/08

(54) **A CONCEPT OF THE SDT (SELF DEPLOYABLE TENSEGRITY) STRUCTURE FOR THE RAPID AND PRECISE LIFTING OF HELIUM AEROSTATS, ESPECIALLY INTO THE STRATOSPHERE**
KONZEPT DER SDT(SELF DEPLOYABLE TENSEGRITY) STRUKTUR FUER DEN SCHNELLEN UND PRAEZISEN AUFTRIEB VON HELIUM BALLONS, INSBESONDERE IN DIE STRATOSPHAERE
CONCEPT DE LA STRUCTURE SDT (TENSEGRITE AUTO DEPLOYABLE) POUR LE LEVAGE RAPIDE ET PRECIS DES AEROSTATS A HELIUM, EN PARTICULIER DANS LA STRATOSPHERE

(30) Priority: 24.07.2019 PL 43070519
(43) Date of publication of application: 27.01.2021
(73) Proprietor: Instytut Podstawowych Problemów Techniki Polskiej Akademii Nauk, 02-106 Warszawa (PL)
(72) Inventor: Holnicki-Szulc, Jan, 02-502 Warsaw (PL); Swiercz, Andrzej, 02-384 Warsaw (PL); Kostro, Sylwester, 18-200 Wysokie Mazowieckie (PL); Knap, Lech, 00-415 Warsaw (PL); Graczykowski, Cezary, 01-756 Warsaw (PL)
(74) Representative: Grzelak, Anna

(56) References cited:
- WO-A1-2016/142724
- WO-A1-2018/068056
- WO-A2-02/097211
- US-A1- 2002 002 807
- US-A1- 2017 021 907
- US-B1- 8 833 000

## Description

The subject of the invention is the SDT (Self-Deployable Tensegrity) structure and a method of fast, collision-free lifting (via a rocket or a plane) to the stratosphere of helium aerostats with a shell-like structure, reinforced by a deployable inner structure.

US20170021907 discloses a solution for the aircraft using a lightweight "tensegrity" support structure on which a gas-tight coating that forms the outer layer of the aircraft is spread. According to the subject matter of the invention, the ascent and descent of the craft is carried out by means of a vacuum pump, which controls the internal pressure. The structure of the craft (vacuustat) does not use gas (e.g. helium, hydrogen) for its ascent and is not a folding structure.

Another document, US6793180 B2**,** describes a folding aircraft whose outer hermetic shell has a built-in set of bars that converge to two points on the axis of the aircraft (front and rear). When unfolded, the structure filled with helium, hot air or their mixture has elastically curved bars that straighten out when the structure is folded. This solution is not based on a "tensegrity" type structure.

The US20030009974A1 demonstrates the possibilities of folding and unfolding "tensegrity" type structures using compressed elements of variable length and additional connectors, braces and clamps.

In addition, the state of the art discloses various deployable structures liftable into space and the ways in which they are assembled, folded-out and deployed.

The WO2012092933 A1 patent application reveals a self-deployable structure deorbiting in space, containing at least one flexible frame supporting at least one flexible sheet, wherein at least one flexible frame is twisted into at least two loops and these at least two loops are folded into an overlapping configuration. In addition, the document discloses the manner in which the said self-deployable structure is stored, which includes deformation by twisting the said one or more flexible frames into two or more loops and by folding the said two or more loops into an overlapping configuration, thus providing the said expandable deorbiting space structure in a tensed configuration; and then maintaining the said self-deployable structure in the said tensed configuration.

The WO2003062565 A1 application discloses an open, folding, self-aligning structure containing: many spaced, bendable longitudinal members; many spaced, bendable and twistable diagonal members arranged to span between longitudinal elements and intersect them to form cells (preferably triangular in shape), each cell being bounded by a part of two mutually distant longitudinal and two mutually distant diagonal elements. In addition, the structure contains means for connecting diagonal elements to longitudinal elements at the cell boundary intersections of the diagonal elements and longitudinal elements; longitudinal elements are made of a material which bends to a certain quantity below the yield point of the material and diagonal elements made of a material which both bends and twists to a predetermined quantity below the yield point, so that the structure can be assembled and subsequently corrected autonomously. Preferably, the longitudinal and diagonal elements are made of a composite material containing fibres in a resin matrix, which is a thermoplastic material. The structure is preferably a cylinder or prism with a longitudinal axis, the longitudinal elements extend along the direction of the longitudinal axis, whereas the diagonal elements contain one set which extends around the cylinder in the first direction and a second set which extends around the cylinder in the second direction.

The US3169611 A document presents a compressed lattice structure containing the first set of only two essentially elongated compression elements with crossed ends. Whereas the compression elements of the first set are generally arranged in the first plane, the second set of only two substantially elongated compression elements is located adjacent to the first set and lies essentially in the second plane (preferably perpendicular to the first plane). The structure also includes a network of ties generally attached to the ends of each of the above mentioned compression elements in both sets and pulling the adjacent edges towards each other. However, in order to form a self-supporting structure, the said members are selectively fixed to separate the said compression members in a given set. Each of these compression elements preferably contains a hollow bar, a joint which is designed to be slideably matched to the end of one of the bars mentioned, the means in the said joint to be connected to the individual tensioning elements in the said tensioning network, the means being adjusted to increase the tension in the said elements connected to them.

The US2017254929 A1 application reveals a star-shaped lattice structure of the "tensegrity" type for space-based deployment and assembly and suitable for deployment and testing in a 1G environment, having a central hub, telescopic booms mounted to the central hub and placed radially outwards to lie in a substantially flat symmetrical truncated cone in their final deployed position; and telescopic tension struts connected to the central hub and the booms to provide a compressive force on the booms towards the central hub when the booms are fully extended in their final unfolded position. The structure also contains a number of opaque panels not supported by the "tensegrity" truss structure, where the booms of the structure are initially fully extended in deployment, where each panel is placed consecutively on the structure and fixed to the structure side by side to form a concentric ring of panels distant from the central hub. In addition, the structure includes a fan fold cover, which is placed on the structure and fixed to the "tensegrity" lattice structure, forming an opaque concentric inner ring around the central hub and the outer edge of the inner ring adheres to the inner edge of the concentric ring of the panels.

Moreover the US2017254929 A1 document discloses the manner in which the said structure is deployed, involving the deployment of the structure from the stored position to the final working position, where the said structure has booms, each end mounted to the central hub, the booms being parallel to each other in the stored position; the booms are then rotated radially outwards and the length of each one is adjusted telescopically so as to lie essentially in a substantially flat symmetrical cone in the final working position; then a compressive force is exerted on the booms towards the central hub, after which each panel is placed and fastened sequentially on the lattice structure in a side by side position to form a concentric ring of panels away from the central hub, while the structure is in its final operating position. The final stage consists in placement and attachment of the fan fold cover to the structure to form an opaque concentric inner ring around the central hub.

A related solution is presented in the EP2828928 A1 application, which refers to a folding out "tensegrity" type structure containing, when unfolded, a support structure with the shape of a ring around its longitudinal axis. The revealed structure consists of a first flexible tensioning member defining the first contour of the ring and a second flexible tensioning member defining the second contour of the ring; between these contours two sets of rigid, compressed elements are placed. The elements of the first set are connected with one end to the first tensioning contour and the elements of the second set are connected with one end to the second tensioning contour. The elements of the first and second set are arranged in a repeatable intersecting pattern around the ring. In addition, the structure includes sets of tensile elements connecting the second end of the compressed elements with the first and second tensioning contour. Preferably, several rigid, compressed components of the structure are provided with additional elements, such as a spring, to change the length of at least one flexible tie and/or include a device to lock at least one flexible tensioning member. Preferably, the rigid compressed elements are bars or struts, and the flexible elements are cables or ties. Favourably, evenly distributed active actuators are installed in the structure, by means of which pre-tensioning of the supporting structure at the required level is achieved. In addition, the EP2828928 A1 document describes the connection between the disclosed structure and a spacecraft using a mounting plate installed on a boom extending from the spacecraft. A plurality of bars are hinged to the plate, whereas the other ends of the bars are connected to the structure by means of revolute joints mounted on the respective ends of rigid compressed members of the support structure. Alternatively, the boom designed as a central support ended with evenly distributed three bars attached by hinges to the ends of the rigid compressed elements of the support structure.

WO 02/097211 A2 presents a tendon-rod structure and detailed solutions for connecting and adjusting tensile elements and rods at the nodes. The subject of the invention covers the class of stable structures, without the possibility of adaptive changes in the length of elements of these structures. Similarly US 2002/002807 A1 discloses a class of basic self-tensioning tensegrity structures composed of tendons and rods. In both cases, the structures can be combined to form larger structures. The document also discloses a method of folding such structures by disconnecting bars and ties and/or by extending the length of the bars.

US 8,833,000 B1 discloses single-module structures similar to classic tensegrity ones and their combined multi-module variants. In this solution, a coating stretched over the structure instead of tendons is used. These forms, however, are not collapsible and are not adaptive.

In WO 2018/068056 A1 publication methods of creating complex structures of tensegrity octahedral elementary modules and their strength analysis are presented. As a result of combining elementary structures, one-dimensional (1D, columns), two-dimensional (2D, plates) and three-dimensional (3D, blocks) structures are created. Neither are these structures collapsible, nor are they adaptive.

The presented solutions do not reveal folding and shape changing of the SDT supportive structure with the use of elastic features of the structural elements i.e. with deformable elastic ties_which enables transformation from the deployed 3D configuration to the folded 1D configuration and vice versa by increase/decrease in potential energy of elasticity in the deformable elastic ties.

It can be seen that helium aerostats, fulfilling the mission of a key complementary link for the Earth observation satellite systems, guaranteeing continuity of observation, closeness to Earth and high economic competitiveness, are becoming a field of intense international technological competition. One of the challenges is related to the technique of lifting the aerostats to the stratosphere (approx. 20 km above the ground), where the cost associated with stabilization of the object are the lowest, due to declining average wind speeds. The safe and efficient lifting of the aerostat is one of the major technical challenges, taking into account the dimensions of the object being lifted and potential collisions with air traffic, even without considering the aspect of the need to react quickly and precisely in critical situations.

The purpose of the invention is a method and apparatus to quickly lift the helium aerostat and place it in a precisely planned place of the stratosphere or troposphere.

It is described an elementary, stable, compressed, six-node 3D bar and tie SDT (self-deployable) structure with a compressed 1D (transport) and deployed 3D (operational) configuration, characterized in that it consists of three rigid bars and six non-deformable and three high-pliability deformable elastic ties, where the nondeformable ties form two parallel triangular bases of the structure, which are connected to each other in such a way that each node of one base is connected to two nodes of the other base by one deformable elastic tie and one bar.

The subject of the invention is an elementary, stable, compressed, six-node 3D bar and tie SDT (self-deployable tensegrity) support structure with a compressed 1D (transport) and deployed 3D (operational) configuration, wherein it consists of three rigid bars and six non-deformable ties and three deformable elastic ties, where the non-deformable ties form two parallel triangular bases of the support structure, which are connected to each other in such a way that each node of one base is connected to two nodes of the other base by one deformable elastic tie and one bar, wherein said structure is combined with an shell allowing the transformation of structure adapted to air transport in the 1D form into the operational 3D form wherein said shell is bound to the support structure by the nodes and wherein said shell is made up of a cylindrical form and its closing forms at both ends, and wherein the deformable elastic ties enable easy transformation of the support structure from the deployed 3D configuration to the folded 1D configuration and from the folded 1D configuration to the deployed 3D configuration by increase/decrease in potential energy of elasticity in the deformable elastic ties.

Preferably, the transformation of the structure to the folded 1D unstable configuration is carried out by means of shortening (coiling) of non-deformable ties.

Preferably, the bases of the structure are two substantially similar polygons, and each node of one base is connected to the other base at different nodes by at least one deformable flexible tie and at least one bar.

Preferably, the structure is composed of two or more elementary structures.

Another subject of the invention is a method of fast lifting of the helium aerostat and its placement at a precisely planned point of the stratosphere or troposphere, involving the transformation of the stable 3D form into the unstable 1D support structure according to the invention, characterized in that for the time of transport the supporting structure is placed together with a composite cylinder with helium or a different carrier gas in a tube installed on the lifting platform in the folded 1D configuration, and then, when the platform reaches the required altitude, the aerostat is ejected from the tube resulting in the automatic transformation of the internal support structure together with the shell into a 3D configuration while filling the aerostat with carrier gas from the composite cylinder, then the emptied cylinder disconnects from the aerostat and, together with the tube, falls back to Earth on a parachute.

This invention provides the following advantages:
- When unfolded, the internal supporting structure adopts the characteristics of a lattice, capable of carrying loads and therefore fixing the shape of the aerostat even when the internal pressure drops, compared to the local external atmospheric pressure;
- In addition, the SDT support structure makes it easy to design the suspension (supported with frames) for the lifted measuring systems, which requires concentrated loads to be applied to the supple aerostat shell.

The invention has been presented in detail in the following embodiments and in the graphical figures, where fig. 1 presents the aerostat in a 1D (packaged) folded configuration, fig. 2 presents the aerostat in a 3D deployed configuration, fig. 3 shows an axonometric view of the aerostat support structure and fig. 4 which shows the top view of the aerostat support structure, fig. 5 shows the force system by which the aerostat support structure is compressed and fig. 6 shows the obtaining of a 1D (unstable) folded form of the SDT structure by applying the system of forces.

### Embodiment 1

An elementary, stable, compressed, six-node 3D bar and tie SDT (self-deployable) structure with a compressed 1D (transport) and deployed 3D (operational) configuration, characterized in that it consists of three rigid bars **2** and six non-deformable **3a, 3b** and three deformable elastic ties **4,** where the non-deformable ties form two parallel triangular bases of the structure, which are connected to each other in such a way that each node **1a**, **1b** of one base is connected to two nodes of the other base by one deformable elastic tie **4** and one bar **2.**

### Embodiment 2

The elementary structure according to embodiment 1 whereas in this embodiment the rigid bars **2** are made of carbon fibre (E=60GPa), the ties **3a** and **3b** are steel wire ropes (E=200 GPa) and the resilient flexible ties **4** are made of rubber (E=0.05GPa).

### Embodiment 3

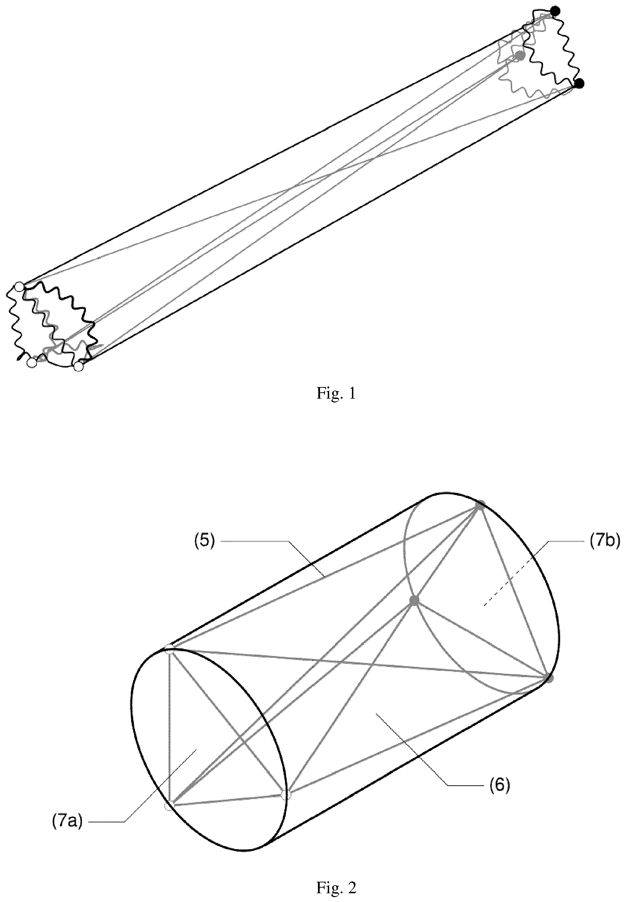

The method of special packing of the aerostat shell, together with the supporting structure shown in Fig. 1, in a way that allows to place the transported object in the rocket tube, and then, after reaching the planned flight altitude (its apogee), release the folded aerostat, fill it with helium or a different carrier gas and disconnect it (after a dozen or so seconds) from the lifting device. While the rocket falls on a parachute with the empty compressed gas cylinder, the filled aerostat takes on the deployed form, as shown in Fig. 2, where the nodes of support structure **5** are permanently bonded to the shell. The shell is made up of a cylindrical form **6** and its closing forms at both ends, **7a** and **7b.**

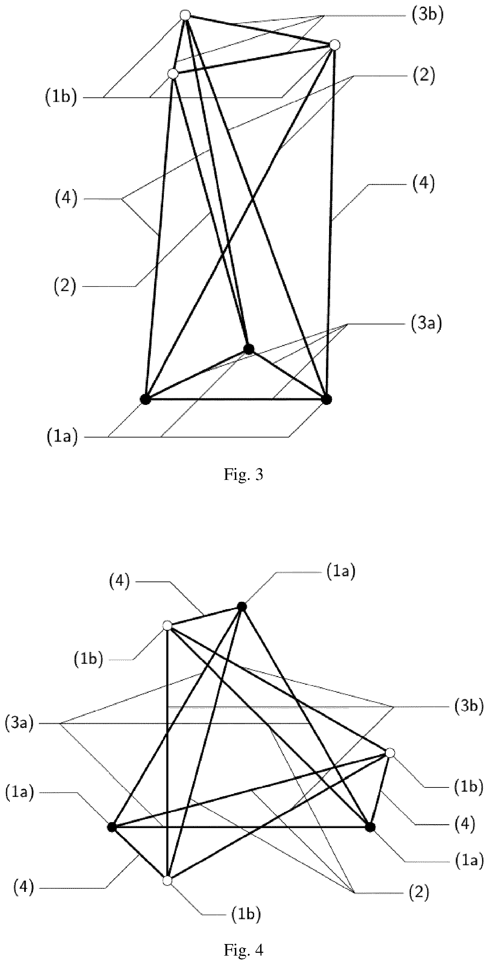

In this non-limiting embodiment, the smallest, elementary support structure (Fig. 3, Fig. 4) is a six-node structure consisting of nine ties and three bars, whose bottom base with nodes **1a** and **3a** and top base with nodes **1b** and **3b** are in the form of equilateral triangles, parallel and rotated to each other. Each node of one base is connected with to the other base with one tie **4** and one bar **2.** This solution is known as the "tensegrity" form and its modification in this approach consists in the replacement of three ties **4** connecting the bases of the elementary structure with deformable elastically stretchable tension ties, which allows the use of a simple folding/unfolding technique (1D/3D) of this supporting structure.

In the literature, the term "tensegrity" refers to a class of mechanically stable structures, composed of as few bars as possible, stabilised by ties so that the resulting system can carry external loads. In this embodiment, we are dealing with a simple arrangement of three bars, stabilized by nine ties.

The introduction of elastically stretchable ties **4** of deformable enables easy transformation of the structure from the 3D deployed configuration (Fig. 2) to the folded 1D configuration (Fig. 1) and vice versa: from the folded 1D configuration to the deployed 3D configuration. The transformation from the deployed 3D configuration (stable form) to a 1D folded configuration (unstable form) is carried out by pulling the nodes at each of the bases of the structure towards the geometric centres of these bases, causing an increase in potential energy of elasticity in the elastically stretchable ties **4.** To keep the structure in the 1D configuration requires tying it down (e.g. by means of a set of bands) or placing it in a tube. On the other hand, the sudden release of nodes **1a** and **1b** of the unstable structure configuration is accompanied by an automatic return of the structure to the stable form ― an unfolded 3D structure. The ability of the structure to change its configuration spontaneously by releasing the potential energy of elasticity defines its self-deployable nature (hence, Self-Deployable Tensegrity, SDT).

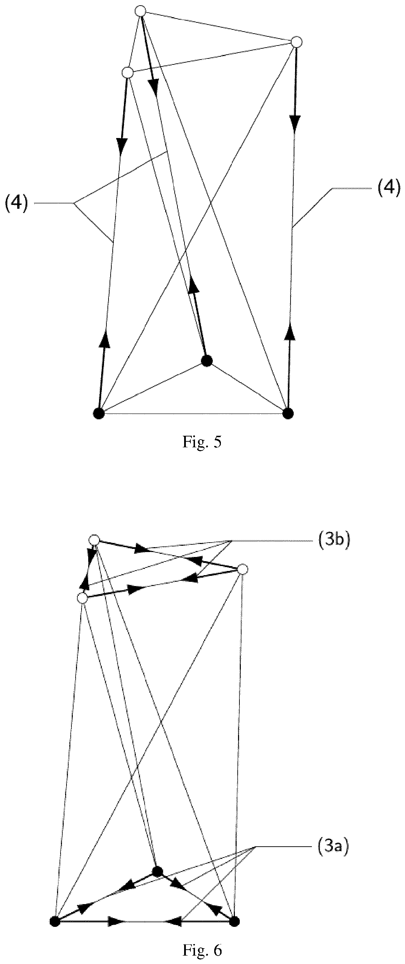

As indicated in Fig. 3 and 4, the support structure in the stable 3D configuration is a prestressed structure. The prestressing of the structure is obtained by pre-tensioning the elastically stretchable ties **4** by means of a system of forces, as shown in Fig. 5. The 1D (unstable) folded form of the SDT structure is obtained by applying a system of forces according to the scheme shown in Fig. 6, which results in an additional increase in the existing tension (stretching) in elements **4** and an increase in the existing prestressing (compression) of elements **2.** Alternatively, this effect is obtained by forcing the shortening (e.g. coiling) of the ties **3a** and **3b** connecting the vertices of the triangular bases of the structure. Then the composite gas cylinder and the folded, unstable 1D structure is placed in the tube, together with the shell rolled up and connected with this structure, so that the structure does not self-deploy. The elongated elastically stretchable ties **4** store the potential energy of compression. After the tube and its packed contents are lifted into orbit, this energy is used during the structure deployment phase to the stable 3D form, followed by filling the aerostat with helium or a different carrier gas from the composite cylinder and pushing the coil out of the shielding tube. When deployed, the internal supporting structure adopts the characteristics of a lattice, capable of carrying loads and therefore fixing the shape of the aerostat even when the internal pressure drops, compared to the local external atmospheric pressure. The structure takes the unstable 1D form using an external system of loading forces applied to the nodes, in such a way that the nodes on each of the two bases of the structure are moved towards the geometric centres of these bases, while the unstable 1D form is maintained as a result of it being tied down, and when the tying-down force is removed, the structure returns to the stable 3D form.

## Claims

1. An elementary, stable, compressed, six-node 3D bar and tie SDT (self-deployable tensegrity) support structure with a compressed 1D transport and deployed 3D operational configuration, wherein it consists of three rigid bars (**2**) and six non-deformable ties (**3a, 3b**) and three deformable elastic ties (**4**), where the non-deformable ties (**3a, 3b**) form two parallel triangular bases of the support structure, which are connected to each other in such a way that each node (**1a**, **1b**) of one base is connected to two nodes of the other base (**1a**, **1b**) by one deformable elastic tie (**4**) and one bar (**2**), wherein said structure is combined with a shell allowing the transformation of structure adapted to air transport in the 1D form into the operational 3D form wherein said shell is bound to the support structure (**5**) by the nodes (**1a**, **1b**) and wherein said shell is made up of a cylindrical form (**6**) and its closing forms at both ends **(7a, 7b),** and wherein the deformable elastic ties (**4**) enable easy transformation of the support structure from the deployed 3D configuration to the folded 1D configuration and from the folded 1D configuration to the deployed 3D configuration by increase/decrease in elastic potential energy in the deformable elastic ties (**4**).

2. The support structure according to claim 1, **characterized in that** the transformation of the structure to the folded 1D unstable configuration is carried out by means of shortening (coiling) of non-deformable ties (**3a, 3b**)**.**

3. The support structure according to claim 1-2, **characterized in that** the bases of the structure are two substantially similar polygons, and each node (**1a**, **1b**) of one base is connected to the other base at different nodes (**1a**, **1b**) by at least one deformable flexible tie (**4**) and at least one bar (**2**).

4. The support structure according to claim 1 or 3, is **characterized in that** it consists of two or more elementary structures.

5. A method of fast lifting of a helium aerostat and placing it at a precisely planned point of the stratosphere or troposphere, involving the transformation of the 3D stable form into an unstable 1D support structure according to claim 1-4, **characterized in that** for the time of transport the supporting structure in the folded 1D configuration is placed together with a composite cylinder with pressurised helium or a different carrier gas in a tube installed on the lifting platform and then, when the platform reaches the required altitude, the aerostat is ejected from the tube resulting in the automatic transformation of the internal support structure together with the shell into a 3D configuration while filling the aerostat with carrier gas from the composite cylinder, then the emptied cylinder disconnects from the aerostat and, together with the tube, falls back to Earth on a parachute.

## Patentansprüche

1. Eine elementare, stabile, vorgespannte 3D-Stab- und Band-SDT-Struktur (Self-Deployable Tensegrity) mit sechs Knoten, die eine komprimierte 1D-Konfiguration (Transport) und eine entfaltete 3D-Konfiguration (Betrieb) aufweist, bestehend aus drei starren Stäben (**2**) und sechs nicht verformbaren Bändern (**3a**, **3b**) und drei verformbaren elastischen Bändern (**4**), wobei die nicht verformbaren Bänder (**3a**, **3b**) zwei parallele dreieckige Grundflächen der Stützstruktur bilden, die so miteinander verbunden sind, dass jeder Knoten (**1a**, **1b**) der einen Basis mit zwei Knoten der anderen Basis (**1a**, **1b**) durch ein verformbares elastisches Band (**4**) und einen Stab (**2**) verbunden ist. Dies Struktur ist mit einer Schale kombiniert, die die Umwandlung der für den Lufttransport geeigneten Struktur in 1D-Form in die funktionsfähige 3D-Form ermöglicht, wobei die besagte Schale durch die Knoten (**1a**, **1b**) mit der Trägerstruktur (**5**) verbunden ist und aus einer zylindrischen Form (**6**) und ihren Verschlussformen an beiden Enden (**7a, 7b**) besteht, und wobei die verformbaren elastischen Bänder (**4**) eine einfache Umwandlung der Trägerstruktur von der entfalteten 3D-Konfiguration in die gefaltete 1D-Konfiguration und von der gefalteten 1D-Konfiguration in die entfaltete 3D-Konfiguration durch Erhöhung/Verringerung der elastischen potentiellen Energie in den verformbaren elastischen Bändern (**4**) ermöglichen.

2. Die Stützstruktur nach Anspruch 1 ist **dadurch gekennzeichnet, dass** die Umwandlung der Struktur in die gefaltete, instabile 1D-Konfiguration durch Verkürzung (Aufwickeln) von nicht verformbaren Bändern (**3a**, **3b**) erfolgt.

3. Die Stützstruktur nach Anspruch 1-2 ist **dadurch gekennzeichnet, dass** die Basen der Struktur zwei im Wesentlichen ähnliche Polygone sind und jeder Knoten (**1a**, **1b**) einer Basis mit der anderen Basis an verschiedenen Knoten (**1a**, **1b**) durch mindestens eine verformbare flexible Verbindung (**4**) und mindestens einen Stab (**2**) verbunden ist.

4. Die Stützstruktur nach Anspruch 1 oder 3 ist **dadurch gekennzeichnet, dass** sie aus zwei oder mehr Elementarstrukturen besteht.

5. Ein Verfahren zum schnellen Anheben des Helium-Aerostaten und dessen Platzierung an einem genau geplanten Punkt der Stratosphäre oder Troposphäre, das die Umwandlung der stabilen 3D-Form in eine instabile 1D-Trägerstruktur nach Anspruch 1-4 beinhaltet, **dadurch gekennzeichnet, dass** für die Zeit des Transports die Trägerstruktur in der gefalteten 1D-Konfiguration zusammen mit einer Verbundflasche mit unter Druck stehendem Helium oder einem anderen Trägergas in einem auf der Hebeplattform installierten Rohr platziert wird und dann, wenn die Plattform die erforderliche Höhe erreicht, der Aerostat aus der Röhre ausgestoßen wird, was zur automatischen Umwandlung der inneren Stützstruktur zusammen mit der Hülle in eine 3D-Konfiguration führt, während der Aerostat mit Trägergas aus der Verbundflasche gefüllt wird. Dann löst sich die entleerte Flasche vom Aerostat und fällt zusammen mit der Röhre an einem Fallschirm zur Erde zurück.

## Revendications

1. Structure de support SDT (tenségrité auto-déployable) élémentaire, stable, compressée, à six nœuds de barre 3D et d'attache avec une configuration 1D compressée (transport) et déployée 3D (opérationnelle), qui consiste en trois barres rigides (2) et six attaches indéformables (**3a**, **3b**) et trois attaches élastiques déformables (**4**), où les attaches indéformables (**3a**, **3b**) forment deux bases triangulaires parallèles de la structure de support, qui sont reliées l'une à l'autre de telle manière à ce que chaque nœud (**1a**, **1b**) d'une base soit relié à deux nœuds de l'autre base (**1a**, **1b**) par un lien élastique déformable (**4**) et une barre (**2**), ladite structure étant associée à une coque permettant la transformation de structure adaptée au transport aérien de la forme 1D à la forme 3D opérationnelle dans laquelle ladite coque est liée à la structure de support (**5**) par les nœuds (**1a**, **1b**) et dans laquelle ladite coque est constituée d'une forme cylindrique (**6**) et de ses formes de fermeture aux deux extrémités (**7a**, **7b**), et dans laquelle les liens élastiques déformables (**4**) permettent une transformation de la structure de support de la configuration 3D déployée à la configuration 1D repliée et de la configuration 1D repliée à la configuration 3D déployée par augmentation/diminution de l'énergie potentielle élastique dans les liens élastiques déformables (**4**).

2. Structure de support selon la revendication 1, **caractérisée en ce que** la transformation de la structure en configuration instable 1D pliée est réalisée au moyen d'un raccourcissement (enroulement) des ficelles indéformables (**3a**, **3b**).

3. Structure de support selon la revendication 1-2, **caractérisée en ce que** les bases de la structure sont deux polygones sensiblement similaires, et chaque nœud (**1a**, **1b**) d'une base est relié à l'autre base à des nœuds différents (**1a**, **1b**) par au moins un lien souple déformable (**4**) et au moins une barre (**2**).

4. La structure de support selon la revendication 1 ou 3, **caractérisée en ce qu'**elle est constituée de deux ou plusieurs structures élémentaires.

5. Procédé de levage rapide de l'aérostat à hélium et de son placement en un point précisément planifié de la stratosphère ou de la troposphère, impliquant la transformation de la forme stable 3D en une structure de support 1D instable selon les revendications 1 à 4, **caractérisé en ce que**, pendant le temps de transport, la structure de support dans la configuration 1D pliée est placée avec un cylindre composite avec de l'hélium sous pression ou un gaz porteur différent dans un tube installé sur la plate-forme élévatrice puis, lorsque la plate-forme atteint l'altitude requise, l'aérostat est éjecté du tube entraînant la transformation automatique de la structure de support interne avec la coque en une configuration 3D tout en remplissant l'aérostat avec le gaz vecteur de la bouteille composite, puis la bouteille vide se déconnecte de l'aérostat et, avec le tube, retombe vers la Terre grâce à un parachute.
